(19) Europäisches Patentamt
European Patent Office
Office européen des brevets

(11) EP 3 474 562 A1

(12) EUROPEAN PATENT APPLICATION

(43) Date of publication:
24.04.2019 Bulletin 2019/17

(51) Int Cl.:
H04N 21/854 (2011.01)　　H04N 21/81 (2011.01)
H04N 21/218 (2011.01)

(21) Application number: 17306443.7

(22) Date of filing: 20.10.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(71) Applicant: Thomson Licensing
92130 Issy-les-Moulineaux (FR)

(72) Inventors:
• CHUPEAU, BERTRAND
35576 CESSON SEVIGNE CEDEX (FR)
• BRIAND, GERARD
35576 CESSON SEVIGNE CEDEX (FR)
• CHAMPEL, MARY-LUC
35576 CESSON SEVIGNE CEDEX (FR)

(74) Representative: Merlet, Hugues et al
InterDigital CE Patent Holdings
20, rue Rouget de Lisle
92130 Issy-les-Moulineaux (FR)

(54) METHOD, APPARATUS AND STREAM FOR VOLUMETRIC VIDEO FORMAT

(57) A method and device for encoding data representative of a 3D scene into a container. To reach that aim, first data representative of texture of the 3D scene visible according to a first point of view is encoded into a first video track of the container; second data representative of geometry of the 3D scene visible according to a set of points of view comprising the first point of view is encoded into at least a second video track of the container; third data representative of texture of the 3D scene visible only from the points of view of the set excluding the first point of view is encoded into a third video track of the container; and metadata is encoded into a fourth track of the container, the metadata being associated with the first data of the first video track, the second data of the at least a second video track and the third data of the third video track, the metadata comprising information representative of at least a projection used to obtain the second and third data.

A corresponding method and device for decoding the encoded data is further disclosed.

**Figure 10**

EP 3 474 562 A1

**Description**

**1. Technical field**

The present disclosure relates to the domain of volumetric video content. The present disclosure is also understood in the context of the encoding and/or the formatting of the data representative of the volumetric content, for example for the rendering on end-user devices such as mobile devices or Head-Mounted Displays.

**2. Background**

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Recently there has been a growth of available large field-of-view content (up to 360°). Such content is potentially n ot fully visible by a user watching the content on immersive display devices such as Head Mounted Displays, smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

Immersive video, also called 360° flat video, allows the user to watch all around himself through rotations of his head around a still point of view. Rotations only allow a 3 Degrees of Freedom (3DoF) experience. Even if 3DoF video is sufficient for a first omnidirectional video experience, for example using a Head-Mounted Display device (HMD), 3DoF video may quickly become frustrating for the viewer who would expect more freedom, for example by experiencing parallax. In addition, 3DoF may also induce dizziness because of a user never only rotates his head but also translates his head in three directions, translations which are not reproduced in 3DoF video experiences.

A large field-of-view content may be, among others, a three-dimension computer graphic imagery scene (3D CGI scene), a point cloud or an immersive video. Many terms might be used to design such immersive videos: Virtual Reality (VR), 360, panoramic, $4\pi$ steradians, immersive, omnidirectional or large field of view for example.

Volumetric video (also known as 6 Degrees of Freedom (6DoF) video) is an alternative to 3DoF video. When watching a 6DoF video, in addition to rotations, the user can also translate his head, and even his body, within the watched content and experience parallax and even volumes. Such videos considerably increase the feeling of immersion and the perception of the scene depth and also prevent from dizziness by providing consistent visual feedback during head translations. The content is created by the means of dedicated sensors allowing the simultaneous recording of color and depth of the scene of interest. The use of rig of color cameras combined with photogrammetry techniques is a common way to perform such a recording.

While 3DoF videos comprise a sequence of images resulting from the un-mapping of texture images (e.g. spherical images encoded according to latitude/longitude projection mapping or equirectangular projection mapping), 6DoF video frames embed information from several points of views. They can be viewed as a temporal series of point clouds resulting from a three-dimension capture. Two kinds of volumetric videos may be considered depending on the viewing conditions. A first one (i.e. complete 6DoF) allows a complete free navigation within the video content whereas a second one (aka. 3DoF+) restricts the user viewing space to a limited volume, allowing limited translation of the head and parallax experience. This second context is a valuable trade-off between free navigation and passive viewing conditions of a seated audience member.

3DoF videos may be encoded in a stream as a sequence of rectangular color images generated according to a chosen projection mapping (e.g. cubical projection mapping, pyramidal projection mapping or equirectangular projection mapping). This encoding has the advantage to make use of standard image and video processing standards. 3DoF+ and 6Dof videos require additional data to encode the depth of colored points of point clouds. The kind of rendering (i.e. 3DoF or volumetric rendering) for a volumetric scene is not known a priori when encoding the scene in a stream. Up to date, streams are encoded for one kind of rendering or the other. There is a lack of a stream, and associated methods and devices, that can carry data representative of a volumetric scene that can be encoded at once and decoded either as a 3DoF video or as a volumetric video (3DoF+ or 6DoF).

**3. Summary**

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of encoding data representative of a 3D scene into a container, the method comprising:

- encoding, into a first video track of the container, first data representative of texture of the 3D scene visible according to a first point of view;
- encoding, into at least a second video track of the container, second data representative of geometry of the 3D scene visible according to a set of points of view comprising the first point of view;
- encoding, into a third video track of the container, third data representative of texture of the 3D scene visible only from the points of view of the set excluding the first point of view; and
- encoding metadata into a fourth track of the container, the metadata being associated with the first data of the first video track, the second data of the at least a second video track and the third data of the third video track, the metadata comprising information representative of at least a projection used to obtain the second and third data.

The present disclosure relates to a device configured to encode data representative of a 3D scene into a container, the device comprising a memory associated with at least one processor configured to:

- encode, into a first video track of the container, first data representative of texture of the 3D scene visible according to a first point of view;
- encode, into at least a second video track of the container, second data representative of geometry of the 3D scene visible according to a set of points of view comprising the first point of view;
- encode, into a third video track of the container, third data representative of texture of the 3D scene visible only from the points of view of the set excluding the first point of view; and
- encode metadata into a fourth track of the container, the metadata being associated with the first data of the first video track, the second data of the at least a second video track and the third data of the third video track, the metadata comprising information representative of at least a projection used to obtain the second and third data.

The present disclosure relates to a device configured to encode data representative of a 3D scene into a container, the device comprising:

- an encoder configured to encode, into a first video track of the container, first data representative of texture of the 3D scene visible according to a first point of view;
- an encoder configured to encode, into at least a second video track of the container, second data representative of geometry of the 3D scene visible according to a set of points of view comprising the first point of view;
- an encoder configured to encode, into a third video track of the container, third data representative of texture of the 3D scene visible only from the points of view of the set excluding the first point of view; and
- an encoder configured to encode metadata into a fourth track of the container, the metadata being associated with the first data of the first video track, the second data of the at least a second video track and the third data of the third video track, the metadata comprising information representative of at least a projection used to obtain the second and third data.

The present disclosure relates to a device configured to encode data representative of a 3D scene into a contain, the device comprising:

- means for encoding, into a first video track of the container, first data representative of texture of the 3D scene visible according to a first point of view;
- means for encoding, into at least a second video track of the container, second data representative of geometry of the 3D scene visible according to a set of points of view comprising the first point of view;
- means for encoding, into a third video track of the container, third data representative of texture of the 3D scene visible only from the points of view of the set excluding the first point of view; and
- means for encoding metadata into a fourth track of the container, the metadata being associated with the first data of the first video track, the second data of the at least a second video track and the third data of the third video track, the metadata comprising information representative of at least a projection used to obtain the second and third data.

The present disclosure relates to a method of decoding data representative of a 3D scene from a container, the method comprising:

- decoding, from a first video track of the container, first data representative of texture of the 3D scene visible according to a first point of view;
- decoding, from at least a second video track of the container, second data representative of geometry of the 3D scene visible according to a set of points of view comprising the first point of view;
- decoding, from a third video track of the container, third data representative of texture of the 3D scene visible only from the points of view of the set excluding the first point of view; and
- decoding metadata from a fourth track of the container, said metadata being associated with the first data of the first video track, the second data of the at least a second video track and the third data of the third video track, said metadata comprising information representative of at least a projection used to obtain the second and third data.

The present disclosure relates to a device configured to decode data representative of a 3D scene from a container, the device comprising a memory associated with at least one processor configured to:

- decode, from a first video track of the container, first data representative of texture of the 3D scene visible according to a first point of view;
- decode, from at least a second video track of the container, second data representative of geometry of the 3D scene visible according to a set of points of view comprising the first point of view;
- decode, from a third video track of the container, third data representative of texture of the 3D scene visible only from the points of view of the set excluding the first point of view; and
- decode metadata from a fourth track of the container, said metadata being associated with the first data of the first video track, the second data of the at least a second video track and the third data of the third video track, said metadata comprising information representative of at least a projection used to obtain the second and third data.

The present disclosure relates to a device configured to decode data representative of a 3D scene from a container, the device comprising:

- a decoder configured to decode, from a first video track of the container, first data representative of texture of the 3D scene visible according to a first point of view;
- a decoder configured to decode, from at least a second video track of the container, second data representative of geometry of the 3D scene visible according to a set of points of view comprising the first point of view;
- a decoder configured to decode, from a third video track of the container, third data representative of texture of the 3D scene visible only from the points of view of the set excluding the first point of view; and
- a decoder configured to decode metadata from a fourth track of the container, said metadata being associated with the first data of the first video track, the second data of the at least a second video track and the third data of the third video track, said metadata comprising information representative of at least a projection used to obtain the second and third data.

The present disclosure relates to a device configured to decode data representative of a 3D scene from a container, the device comprising:

- means for decoding, from a first video track of the container, first data representative of texture of the 3D scene visible according to a first point of view;
- means for decoding, from at least a second video track of the container, second data representative of geometry of the 3D scene visible according to a set of points of view comprising the first point of view;
- means for decoding, from a third video track of the container, third data representative of texture of the 3D scene visible only from the points of view of the set excluding the first point of view; and
- means for decoding metadata from a fourth track of the container, said metadata being associated with the first data of the first video track, the second data of the at least a second video track and the third data of the third video track, said metadata comprising information representative of at least a projection used to obtain the second and third data.

According to a particular characteristic, the first video track refers to a first syntax element of a bitstream, the at least a second video track refers to at least a second syntax element of the bitstream and the third video track refers to a third syntax element of the bitstream.

According to a specific characteristic, the second data comprises a first information representative of a format of a projection used to obtain the geometry, parameters of the projection and a flag indicating whether at least some of the projection parameters are dynamically updated.

According to another characteristic, the third data comprises a second information representative of a format of a projection used to obtain the texture, parameters of the projection and a flag indicating whether at least some of the projection parameters are dynamically updated.

According to a further characteristic, the first video track and the at least a second video track are grouped in a same track group when the first information and second information are identical.

According to a particular characteristic, the metadata comprises at least one of the following information:

- information representative of at least one point of view associated with at least one projection used to obtain the geometry and texture;
- information representative of a packing of rectangular 2D patches of geometry, each patch of geometry being associated with the projection of a part of the 3D scene;
- information representative of a packing of rectangular 2D patches of texture, each patch of texture being associated with the projection of a part of the 3D scene;
- information representative of a number of 3D patches, each 3D patch being associated with a part of the 3D scene and associated with an identifier in the second track and in the first video track or in the third video track.

The present disclosure also relates to a bitstream carrying data representative of a 3D scene, the data comprising, in a first video track of a container, first data representative of texture of the 3D scene visible according to a first point of view; in at least a second video track of the container, second data representative of geometry of the 3D scene visible according to a set of points of view comprising the first point of view; in a third video track of the container, third data representative of texture of the 3D scene visible only from the points of view of the set excluding the first point of view; and metadata in a fourth track of the container, the metadata being associated with the first data of the first video track, the second data of the at least a second video track and the third data of the third video track, the metadata comprising information representative of at least a projection used to obtain the second and third data.

The present disclosure also relates to a computer program product comprising program code instructions to execute the steps of the method of encoding or decoding data representative of a 3D scene, when this program is executed on a computer.

The present disclosure also relates to a (non-transitory) processor readable medium having stored therein instructions for causing a processor to perform at least the abovementioned method of encoding or decoding data representative of a 3D scene.

## 4. List of figures

The present disclosure will be better understood, and other specific features and advantages will emerge upon reading the following description, the description making reference to the annexed drawings wherein:

- Figure 1 shows a three-dimension (3D) model of an object and a points of a point cloud corresponding to the 3D model, according to a non-restrictive embodiment of the present principles;
- Figure 2 shows an image representing a three-dimension scene comprising a surface representation of several objects, according to a non-restrictive embodiment of the present principles;
- Figure 3 illustrates an example arrangement of points of view on the scene of figure 2 and visible points of this scene from different points of view of this arrangement, according to a non-restrictive embodiment of the present principles;
- Figure 4 illustrates the parallax experience by showing different views of the scene of figure 2 according to the point of view of the figure 3, according to a non-restrictive embodiment of the present principles;
- Figure 5 shows a texture image of the points of the scene of figure 2 visible from the point of view of figure 3 according to an equirectangular projection mapping, according to a non-restrictive embodiment of the present principles;
- Figure 6 shows an image of the same points of the scene as in figure 5 encoded according to a cubical projection mapping, according to a non-restrictive embodiment of the present principles;
- Figure 7 shows a depth image (also called depth map) of the 3D scene of figure 2 according to the point of view of figure 3, according to a non-restrictive embodiment of the present principles;
- Figures 8A and 8B illustrate a part of a depth patch atlas for points of the scene projected onto the texture map of figure 5, according to a non-restrictive embodiment of the present principles;
- Figure 9 shows an encoding of residual points as patches after the encoding of the image of figure 5 or figure 6, according to a non-restrictive embodiment of the present principles;
- Figure 10 illustrates an example of the encoding, transmission and decoding of a sequence of 3D scene in a format that is, at the same time, 3DoF rendering compatible and 3DoF+ rendering compatible, according to a non-restrictive embodiment of the present principles;
- Figure 11 shows a process of obtaining, encoding and/or formatting data representative of the 3D scene of figure 2, according to a non-restrictive embodiment of the present principles;
- Figure 12 shows a process of decoding and rendering the 3D scene of figure 2, according to a non-restrictive embodiment of the present principles;

- Figure 13 shows an example of a container comprising information representative of the 3D scene of figure 2, according to a non-restrictive embodiment of the present principles;
- Figure 14 shows an example of the syntax of a bitstream carrying the information and data representative of the 3D scene of figure 2, according to a non-restrictive embodiment of the present principles;
- Figure 15 shows an example architecture of a device which may be configured to implement a method described in relation with figures 11, 12, 16 and/or 17, according to a non-restrictive embodiment of the present principles;
- Figure 16 illustrates a method for encoding data representative of the 3D scene of figure 2, implemented for example in the device of figure 15, according to a non-restrictive embodiment of the present principles;
- Figure 17 illustrates a method for decoding data representative of the 3D scene of figure 2, implemented for example in the device of figure 15, according to a non-restrictive embodiment of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present description illustrates the principles of the present disclosure. It will thus be appreciated that those skilled in the art will be able to devise various arrangements that, although not explicitly described or shown herein, embody the principles of the disclosure.

According to non-limitative embodiments of the present disclosure, methods and devices to encode images of a volumetric video (also called 3DoF+ or 6DoF video) in a container and/or in a bitstream are disclosed. Methods and devices to decode images of a volumetric video from a stream are also disclosed. Examples of the syntax of a bitstream for the encoding of one or more images of a volumetric video are also disclosed.

According to a first aspect, the present principles will be described in reference to a first particular embodiment of a method of (and a device configured for) encoding data representative of a 3D scene (represented with an omnidirectional content, also called immersive video) into a container and/or a bitstream. To reach that aim, first data representative of the texture (e.g. color information associated with the elements, e.g. points, of the 3D scene) of the 3D scene visible according to a first point of view is encoded in a first video track of the container. Second data representative of the geometry of the 3D scene visible according to a set or range of points of view is encoded into a second video track of the container, the set of points of view comprising the first point of view (for example is centered on the first point of view). Third data representative of the texture of the 3D scene is also encoded in a third video track of the container. The third data corresponds for example to the texture information associated with the parts of the 3D scene that are visible from the points of view of the set of points of view, excluding the part of the scene that is visible according to the first point of view to avoid the encoding of a same information twice (i.e. once into the first video track and once into the third video track). Metadata is encoded into a fourth track of the container, the metadata comprising information (e.g. parameters) representative of the one or more projections used to obtain the second data and the third data.

A corresponding method of (and a device configured for) decoding data representative of the 3D scene is also described with regard to the first aspect of the present principles.

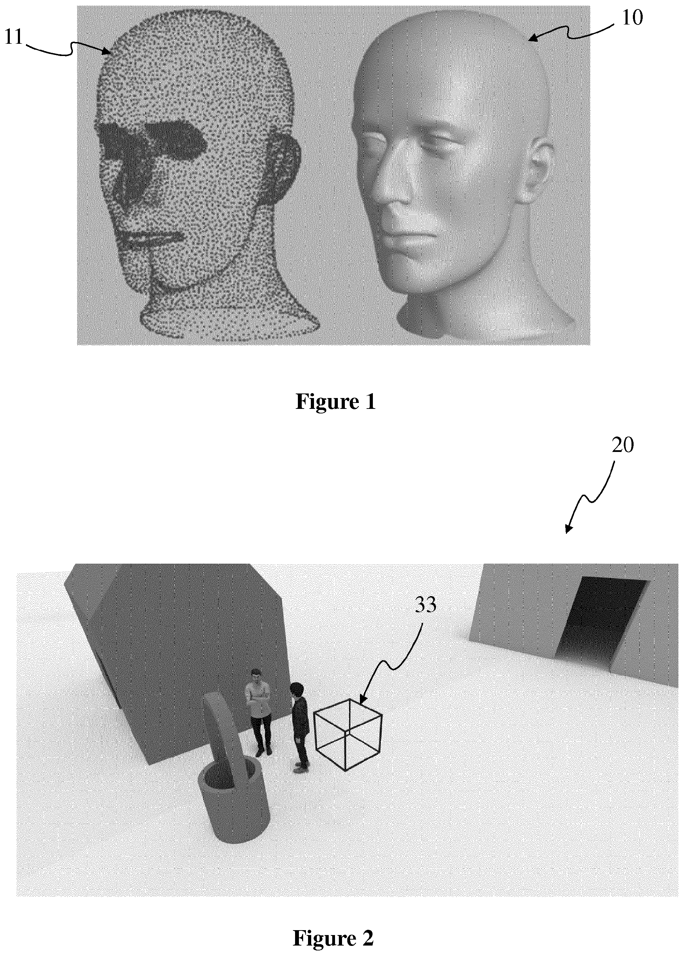

**Figure 1** shows a three-dimension (3D) model of an object 10 and points of a point cloud 11 corresponding to the 3D model 10. Model 10 may be a 3D mesh representation and points of point cloud 11 may be the vertices of the mesh. Points 11 may also points spread on the surface of faces of the mesh. Model 10 may also be represented as a splatted version of point of cloud 11; the surface of model 10 being created by splatting the point of point of cloud 11. Model 10 may be represented by a lot of different representations such as voxels or splines. Figure 1 illustrates the fact that it is always possible to define a point cloud from a surface representation of a 3D object and reciprocally always possible to create a surface representation of a 3D object from a point of cloud. As used herein, projecting points of a 3D object (by extension points of a 3D scene) to an image is equivalent to projecting any representation of this 3D object to an object.

A point cloud may be seen as a vector based structure, wherein each point has its coordinates (e.g. three-dimensional coordinates XYZ, or a depth/distance from a given point of view) and one or more attributes, also called component. An example of component is the color component that may be expressed in different color spaces, for example RGB (Red, Green and Blue) or YUV (Y being the luma component and UV two chrominance components). The point cloud is a representation of the object as seen from a given point of view, or a range of point of views. The point cloud may be obtained of different ways, e.g.:

- from a capture of a real object shot by a rig of cameras, optionally complemented by depth active sensing device;
- from a capture of a virtual/synthetic object shot by a rig of virtual cameras in a modelling tool;

•    from a mix of both real and virtual objects.

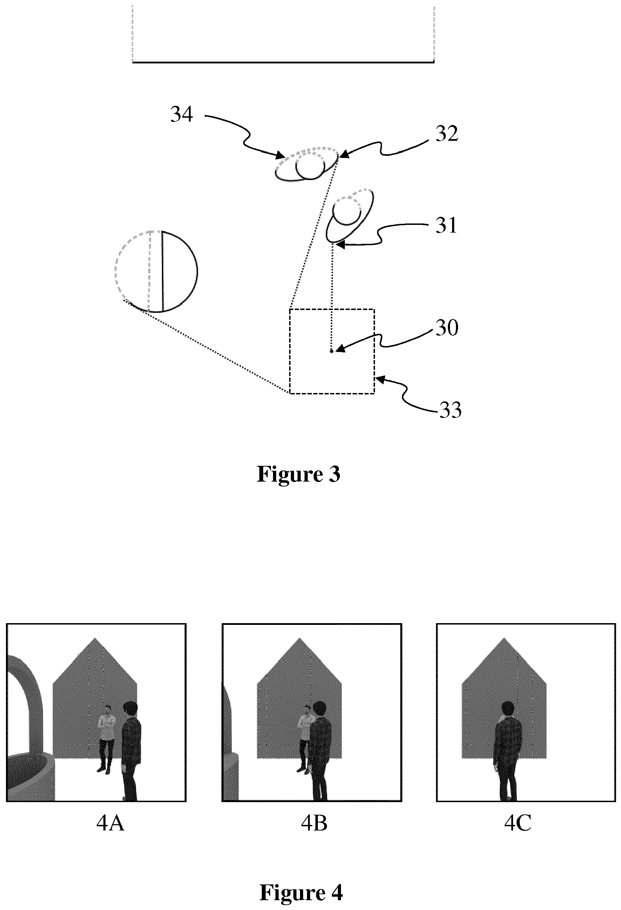

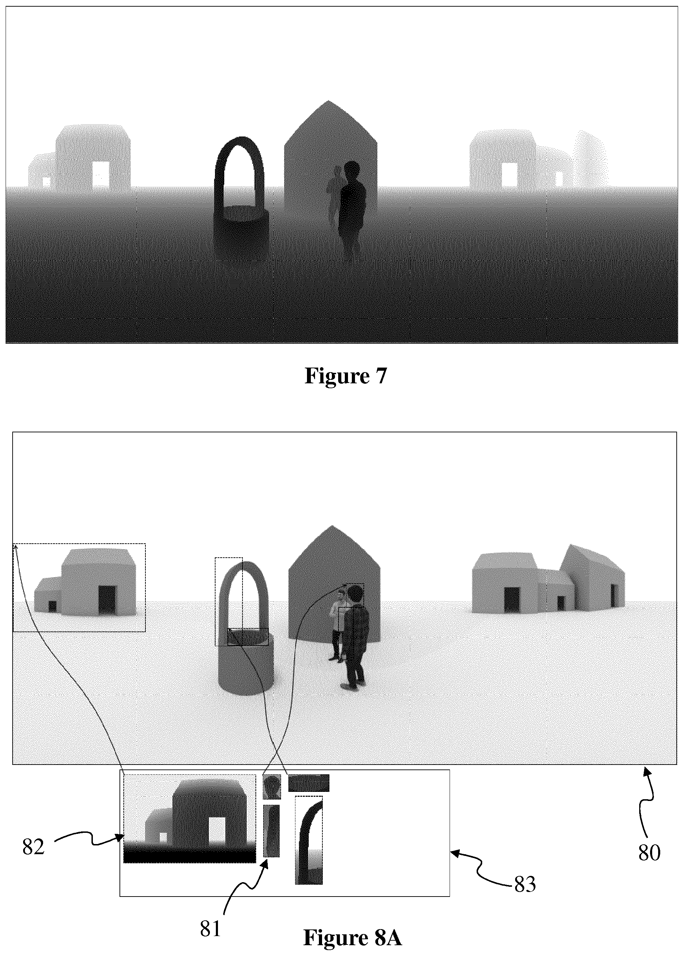

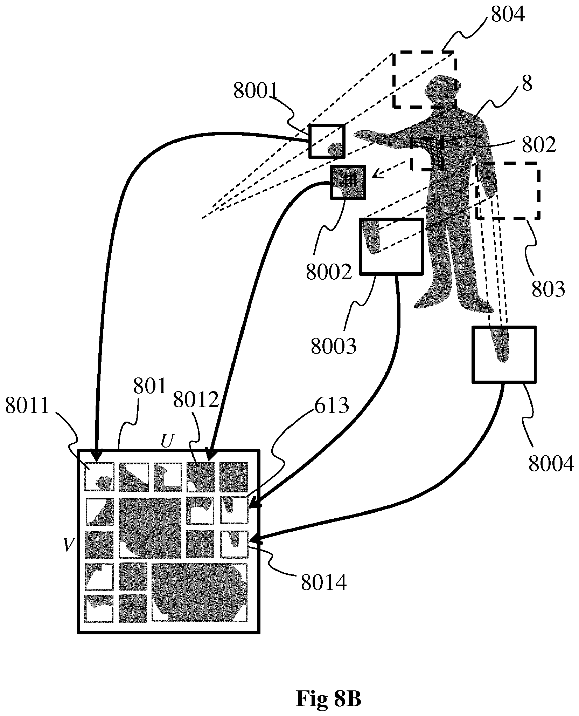

**Figure 2** shows an image 20 representing a three-dimension scene comprising a surface representation of several objects. The scene may have been captured using any suitable technology. For example, it may have been created using computer graphics interface (CGI) tools. It may have been captured by color image and depth image acquisition devices. In such a case, it is possible that part of the objects that are not visible from the acquisition devices (e.g. cameras) may not be represented in the scene as described in relation to figures 3, 8A and 8B. The example scene illustrated in figure 2 comprises houses, two characters and a well. Cube 33 on figure 2 illustrates a space of view from which a user is likely to observe the 3D scene from.

**Figure 3** shows an example arrangement of points of view on a scene, e.g. the 3D scene 20 of figure 2. Figure 3 also shows the points of this 3D scene 20 that are visible from / according to the different points of view of this arrangement. To be rendered and displayed by an immersive rendering device (e.g. a cave or a Head Mounted Display device (HMD)), a 3D scene is considered from a first point of view, for example the first view point 30. Point 31 of the scene, corresponding to the right elbow of the first character is visible from the first point of view 30, as there is not any opaque object laying between the first point of view 30 and the scene point 31. On the contrary, the point 32 of the 3D scene 20, which corresponds for example to the left elbow of the second character, is not visible from the first point of view 30, as it is occluded by points of the first character. For 3DoF rendering, only one point of view, for example the first point of view 30, is considered. The user may rotate his head in three degrees of freedom around the first point of view to watch different parts of the 3D scene, but the user cannot move the first point of view. Points of the scene to be encoded in the stream are points which are visible from this first point of view. There is no need to encode points of the scene that are not visible from this first point of view as the user cannot access to them by moving the first point of view.

With regard to 6DoF rendering, the user may move the point of view everywhere in the scene. In this case, it is valuable to encode every point of the scene in the content stream as every point is potentially accessible by a user who can move his/her point of view. At the encoding stage, there is no means to know, a priori, from which point of view the user will observe the 3D scene 20.

With regard to 3DoF+ rendering, the user may move the point of view within a limited space around a point of view, for example around the first point of view 30. For example, the user may move his point of view within a cube 33 centered on the first point of view 30. This enables to experience parallax as illustrated in relation to figure 4. Data representative of the part of the scene visible from any point of the space of view, for example the cube 33, is to be encoded into the stream, including the data representative of the 3D scene visible according to the first point of view 30. The size and shape of the space of view may for example be decided and determined at the encoding step and encoded in the stream. The decoder obtains these information from the stream and the renderer limits the space of view to the space determined by the obtained information. According to another example, the renderer determines the space of view according to hardware constraints, for example in relation to capabilities of the sensor(s) that detects the movements of the user. In such a case, if, at the encoding phase, a point visible from a point within the space of view of the renderer has not been encoded in the data stream, this point will not be rendered. According to a further example, data (e.g. texture and/or geometry) representative of every point of the 3D scene is encoded in the stream without considering the rendering space of view. To optimize the size of the stream, only a subset of the points of the scene may be encoded, for instance the subset of points that may be seen according to a rendering space of view.

**Figure 4** illustrates the parallax experience that is allowed by volumetric (i.e. 3DoF+ and 6DoF) rendering. Figure 4B illustrates the part of the scene a user could see from the first point of view 30 of the figure 3. From this first point of view, the two characters are in a given spatial configuration, for example, the left elbow of the second character (with a white shirt) is hidden by the body of the first character while his head is visible. When the user is rotating his/her head in the three degrees of freedom around the first point of view 30, this configuration does not change. If the point of view is fixed, the left elbow of the second character is not visible. Figure 4A illustrates the same part of the scene seen from a point of view at the left side of the space of view 33 of figure 3. From such a point of view, the point 32 of figure 3 is visible due to the parallax effect. Therefore, for a volumetric rendering, the point 32 has to be encoded in the stream. If not encoded, this point 32 will not be rendered. Figure 4C illustrates the same part of the scene observed from a point of view located at the right side of the space of view 33 of figure 3. From this point of view, the second character is almost entirely hidden by the first character.

By moving the point of view within the 3D scene, the user may experience the parallax effect.

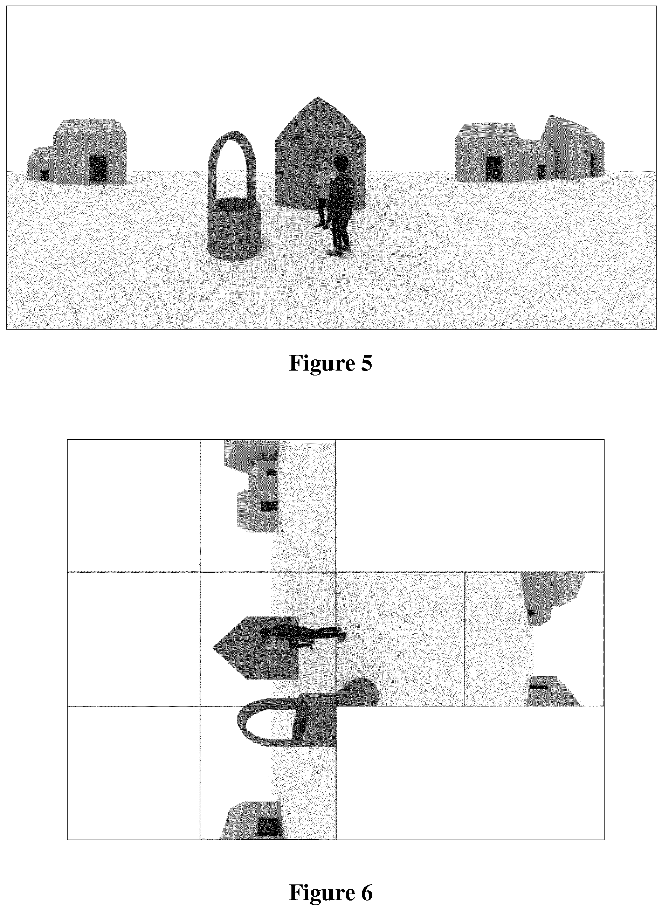

**Figure 5** shows a texture image (also called color image) comprising the texture information (e.g. RGB data or YUV data) of the points of the 3D scene 20 that are visible from the first point of view 30 of figure 3, this texture information being obtained according to an equirectangular projection mapping. Equirectangular projection mapping is an example of spherical projection mapping.

**Figure 6** shows an image of the same points of the scene obtained or encoded according to a cubical projection mapping. There are different cubical projection mappings. For example, faces of the cube may be arranged differently in image of figure 6 and/or faces may be differently oriented.

The projection mapping used to obtain / encode points of the scene visible from the determined point of view is selected, for example, according to compression criteria, or, for instance according to a standard option. It is known by a person skilled in the art that it is always possible to convert an image obtained by the projection of a point cloud according to a projection mapping to an equivalent image of the same point cloud according to a different projection mapping. Such a conversion may nevertheless imply some loss in the resolution of the projection.

Figures 5 and 6 are shown in shades of grey. It is naturally understood that they are examples of texture (color) images (encoding the texture (color) of the points of the scene), for example in RGB or in YUV. Figures 5 and 6 comprise data necessary for a 3DoF rendering of the 3D scene. A decoder receiving a bitstream or data stream comprising, in a first element of syntax, an image as the example images of figures 5 and 6 decodes the image using a method correlated to the method used for the encoding of the image. The stream may be encoded according to standard image and video compression methods and standard format for image and video transport, for example MPEG-2, H.264 or HEVC. The decoder may transmit the decoded image (or sequence of images) to a 3DoF renderer or to a module for reformatting for example. A 3DoF renderer would project the image on a surface corresponding to the projection mapping used at the encoding (e.g. a sphere for the image of figure 5, a cube for the image of figure 6). In a variant, the renderer converts the image according to a different projection mapping before projecting it.

An image is compatible with a 3DoF rendering when the image encodes points of a 3D scene according to a projection mapping. The scene may comprise points at 360°. Projection mappings co mmonly used to encode images compatible with 3DoF rendering are, for instance, among spherical mappings: equirectangular projection or longitude/latitude projection, or different layouts of cubical projection mappings or pyramidal projection mappings.

**Figure 7** shows a depth image (also called depth map) of the 3D scene 20 according to the first point of view 30. Depth information is required for volumetric rendering. In the example encoding of the image of figure 7, the darker the pixel, the closer the point projected to this pixel from the point of view. For example, the depth may be encoded on twelve bits, that is the depth is represented by an integer between 0 and $2^{12}-1 = 4095$. If, for instance, the closest point is located at 1 meter from the determined point of view and the farthest point at 25 meters, a linear encoding of depth would be performed by steps of 0,586 centimetres (= (2500 - 100) / 4096). Depth may also be encoded according to a logarithmic scale as a depth value imprecision of a point far from the point of view is less important than a depth value imprecision for a point close to the point of view. In the example embodiment of figure 7, depth of points of the scene visible from the point of view is encoded in a depth map according to the same projection mapping than the projection mapping used to encode the color map of figure 5. In another embodiment, depth may be encoding according to a different projection mapping. The renderer converts the depth map and/or the color image in order to de-project points of the scene encoded in these data. This embodiment may increase the depth imprecision.

According to another embodiment, depth of points visible from the determined point of view, for example point of view 30 of figure 3, may be encoded as a patch atlas. **Figure 8A** illustrates a part of a depth patch atlas 83 for points of the scene projected to the color map 80 of figure 5. A patch is a picture obtained by clustering the projected points. A patch corresponds to a part of the projected points which define an area of adjacent pixels in the projection map and which are depth consistent. The part is defined by the angular range the corresponding projected points occupy in the space from the point of view. Patches are clustered in the projection map according to their connectivity and depth. An area P covers a set of adjacent pixels of the projection map where a projection occurred, and which is depth-consistent. The depth consistency check comes down to considering the distance Z between the point of view and each projected point covered by P, and ensuring that the distance range of these pixels is not deeper than a threshold T. This threshold may depend on Zmax (the maximum distance between the viewing point and the projected pixels covered by P), on the dynamic D of the depth stored in the generated picture by the further generating operation, and on perceptual properties. For example, the typical human visual acuity is about three minutes of arc. Determining the threshold T according to these criteria have several advantages. At one hand, an image patch in the picture generated in the further generating operation will cover a depth range consistent with the depth resolution of pixels of the generated picture (e.g. 10 bits or 12 bits) and, so, be robust to compression artifacts. On the other hand, the depth range is perceptually-driven by the 3DoF+ context. Indeed, human vision does not equally perceive distance for close or far points. As an example, the threshold may be defined according to equation [eq. 1].

$$[eq.\ 1] \qquad T(Z_{max}, D, VA) \;=\; Z_{max} \frac{2^{D}\, tan(\frac{VA}{2})}{1 + 2^{D} tan(\frac{VA}{2})}$$

Where VA is a value for visual acuity.

For example, patch 81 is obtained for the left arm of the first character. Encoding the depth of the part of the projected points of the scene is valuable as the $2^{D}$ values of the dynamics range are used to encode a short distance of a couple of decimetres, allowing a higher precision for the depth encoding and a higher robustness to compression artifacts. A patch 82 is obtained for a pair of houses. The depth range to encode is bigger but, as the houses are far from the point of view, an imprecision in the encoding is leading to less visible visual artifacts. Though, depth encoding precision is increased for this part of the scene compared to the depth map of figure 7.

Patches are arranged in a picture 83, called patch atlas 83, with a given angular resolution (e.g. 3 seconds per pixel or 5 seconds per pixel) according to the size that the projection of points of the patch will occupy in the patch atlas. The arrangement consists in reserving an area in the patch atlas for projecting (depth and color) the points associated with the patch. The size of the reserved area depends on the picture angular resolution and on the angular range of the patch. The location of the areas in the frame is optimized to cover the picture's frame without overlapping. A patch data item comprises data mapping a depth patch packed in the depth patch atlas with corresponding color pixel area in the color image. For example, a patch data item comprises coordinates of the up left corner of the patch in the patch atlas, the width and height of the patch in the patch atlas, the up left corner of the corresponding color pixels in the color image, the width and height of the area of the color image of the corresponding color pixels. In a variant, information of a patch data item is represented by angular range data to facilitate the localisation in a color image encoded, for example, according to a spherical projection mapping.

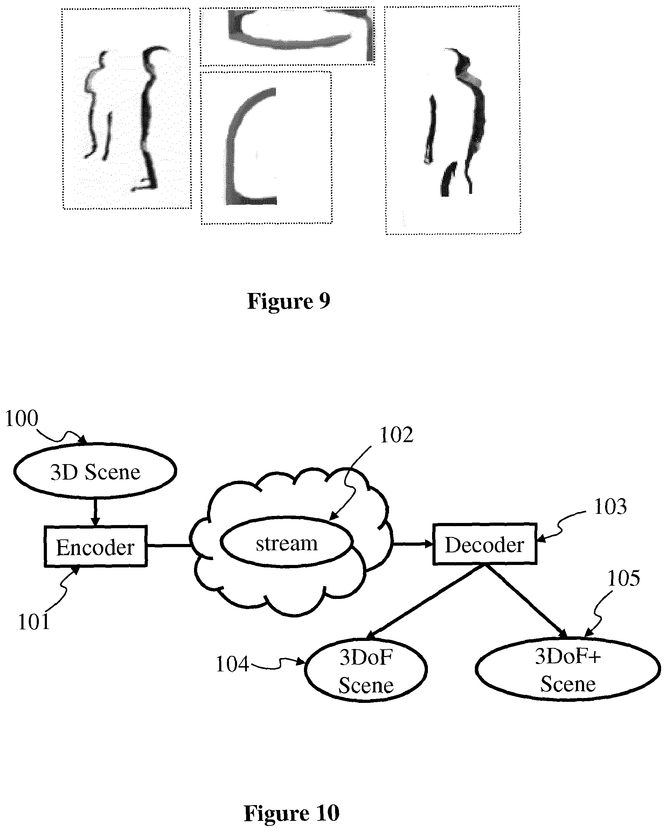

Points visible from a given (or determined) point of view are a part of the points of the 3D scene. To fully encode the 3D scene, residual points (i.e. the point that have not been encoded in the 3DoF compatible color image and corresponding depth data) are encoded in the stream. **Figure 9** shows the encoding of such residual points as patches.

**Figure 8B** illustrates the obtaining of patches of a part of the 3D scene (e.g. one of the character of the 3D scene 20) that are packed on a patch atlas 801, according to another non-limiting example of the present principles. The point cloud representing the 3D object 8 is partitioned into a plurality of 3D parts, e.g. 50, 100, 1000 or more 3D parts, 3 of them being illustrated on Figure 8B, i.e. the 3D parts 802, 803 and 804, the 3D part 804 comprising points of the point cloud representing part of the head of the person, the 3D part 802 comprising points of the point cloud representing an armpit of the person and the 3D part 803 comprising points of the point cloud representing a hand of the person. One or more patches of each 3D part or of a part of the 3D parts are generated to represent each 3D part in two dimensions, i.e. according to a 2D parametrization. For example, a 2D parametrization 8001 is obtained for the 3D part 804, a 2D parametrization 8002 is obtained for the 3D part 802 and 2 different 2D parametrizations 8003 and 8004 are obtained for the 3D part 803. The 2D parametrization may vary from a 3D part to another one. For example, the 2D parametrization 8001 associated with the 3D part 801 is a linear perspective projection while the 2D parametrization 8002 associated with the 3D part 802 is a LLE and the 2D parametrizations 8003 and 8004 associated with the 3D part 803 are both orthographic projections according to different points of view. According to a variant, all 2D parametrizations associated with all 3D parts are of the same type, e.g. a linear perspective projection or an orthographic projection. According to a variant, different 2D parametrizations may be used for a same 3D part.

A 2D parametrization associated with one given 3D part of the point cloud corresponds to a browsing in 2 dimensions of the given 3D part of the point cloud allowing to sample the given 3D part, i.e. a 2D representation of the content (i.e. the point(s)) of this given 3D part comprising a plurality of samples (that may correspond to the pixels of a first image), the number of which depending from the sampling step that is applied. A 2D parametrization may be obtained in diverse ways, for example by implementing any one of the following methods:

- linear perspective projection of the points of the 3D part of the point cloud onto a plane associated with a point of view, the parameters representative of the linear perspective projection comprising the location of the virtual camera, the spatial sampling step and the field of view in the 2 dimensions;
- orthographic projection of the points of the 3D part of the point cloud onto a surface, the parameters representative of the orthographic projection comprising the geometry (shape, size and orientation) of the projecting surface and spatial sampling step;
- LLE (Locally-Linear Embedding) that corresponds to a mathematical operation of dimension reduction, here applied to convert/transform from 3D to 2D, the parameters representative of the LLE comprising the transformation coefficients.

Each patch has advantageously a rectangular shape to ease the packing process on the patch atlas 801. The patch atlas 801 may be a geometry patch atlas, i.e. a picture of pixels comprising the different patches 8011, 8012, 8014 (that may be seen as arrays of pixels for example), geometry information obtained by projection / 2D parametrization of the points of the associated 3D part being associated with each pixel. Geometry information may correspond to depth information or information on the position of the vertices of a mesh element. A corresponding texture patch atlas comprising the texture information associated with the 3D parts may be obtained in a same way.

Mapping information that links each 2D parametrization with its associated patch in the geometry patch atlas and in the texture patch atlas may be generated. The mapping information may be generated to keep the connection between a 2D parametrization and the associated geometry patch and texture patch in respectively the geometry patch atlas and the texture patch atlas. The mapping information may for example be of the form of:

{parameters of the 2D parametrization; geometry patch ID; texture patch ID}

wherein the geometry patch ID may be an integer value or a pair of values comprising the column index U and the row index V the geometry patch belongs to in the matrix of patches of the geometry patch atlas; the texture patch ID may be an integer value or a pair of values comprising the column index U' and the row index V' the texture patch belongs to in the matrix of patches of the texture patch atlas.

When the geometry patches and the texture patches are arranged according to a same arrangement in the geometry patch atlas and the texture patch atlas, the geometry patch ID and the texture patch ID are the same and the mapping information may be for example of the form of:

{parameters of the 2D parametrization; geometry and texture patch ID}

wherein 'geometry and texture patch ID' identifies both geometry patch in the geometry patch atlas and the texture patch in the texture patch atlas, either via a same integer value associated with both geometry patch and texture patch or via the pair of values column index U and row index V the geometry patch and texture patches belong in respectively the geometry patch atlas and the texture patch atlas.

The same mapping information is generated for each 2D parametrization and associated geometry patch and texture patch. Such a mapping information enables to reconstruct the corresponding parts of the 3D scene by establishing the association of the 2D parametrization with corresponding geometry patch and texture patch. If the 2D parametrization is a projection, the corresponding part of the 3D scene may be reconstructed by de-projecting (performing the inverse projection) the geometry information comprised in the associated geometry patch and the texture information in the associated texture patch. The mapping information then corresponds to a list of mapping information:

{parameters of the 2D parametrization; geometry and texture patch ID}$_i$,

For i = 1 to n, with n the number of 2D parametrizations.

**Figure 10** illustrates an example of the encoding, transmission and decoding of a sequence of 3D scene in a format that is, at the same time, 3DoF rendering compatible and volumetric rendering compatible. A three-dimension scene 100 (or a sequence of 3D scenes) is encoded in a stream 102 by an encoder 101. The stream 102 comprises a first element of syntax carrying data representative of a 3D scene for a 3DoF rendering and at least a second element of syntax carrying data representative of the 3D scene for 3DoF+ rendering. A decoder 103 obtains the stream 102 from a source. For example, the source belongs to a set comprising:

- a local memory, e.g. a video memory or a RAM (or Random-Access Memory), a flash memory, a ROM (or Read Only Memory), a hard disk;
- a storage interface, e.g. an interface with a mass storage, a RAM, a flash memory, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth® interface); and
- a user interface such as a Graphical User Interface enabling a user to input data.

The decoder 103 decodes the first element of syntax of the stream 102 for 3DoF rendering 104. For 3DoF+ rendering 105, the decoder decodes both the first element of syntax and the second element of syntax of the stream 102.

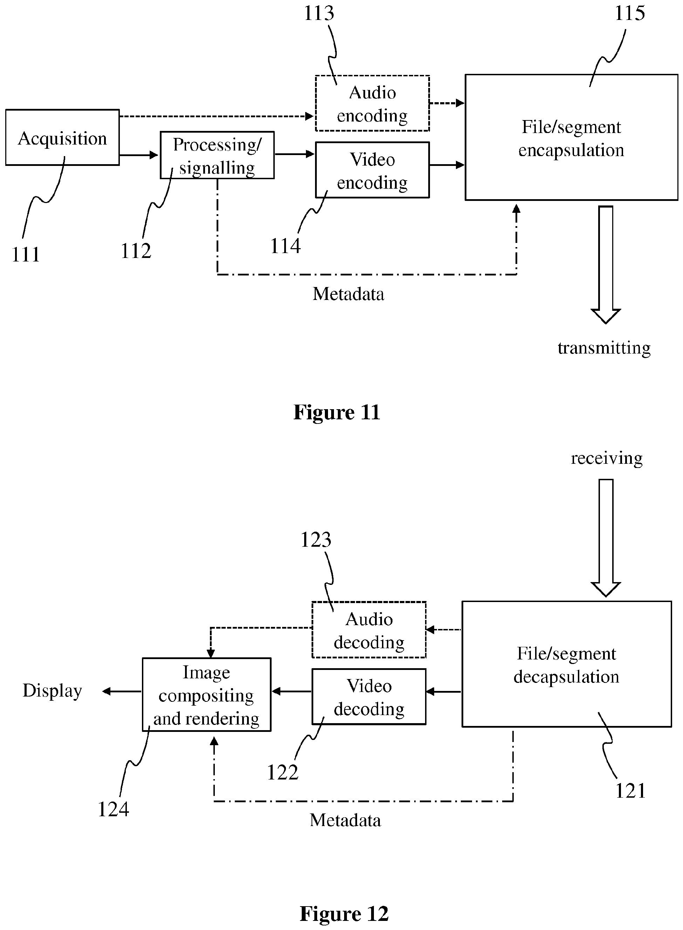

**Figure 11** shows a process of obtaining, encoding, formatting and/or encapsulating data representative of the 3D scene 20, according to a non-restrictive embodiment of the present principles.

In an operation 111, data associated with elements (e.g. points) of the 3D scene is acquired, the data corresponding to attributes associated with the elements of the scene, i.e. texture (color) attributes and/or geometry attributes. For example, a sequence of temporally successive images may be acquired. The texture attributes may be acquired with one or more photosensors and the geometry attributes may for example be acquired with one or more depth sensors. According to a variant, the 3D scene is obtained with CGI (Computer-generated imagery) technology. At least a part of the 3D scene is visible according to a plurality of points of view, for example according to a range of points of view including a first central point of view. According to a variant, the 3D scene is neither acquired nor generated via CGI but retrieved from the cloud, a library of omnidirectional contents or any storage unit or apparatus. An audio track associated with the 3D scene may also be optionally acquired.

In an operation 112, the 3D scene is processed. The images of the 3D scene may be for example stitched if acquired with a plurality of cameras. During operation 112, it is signalled to a video encoder under which format the representation of the 3D scene may be encoded, for example according to H.264 standard or HEVC standard. During operation 112, it is further signalled which 3D to 2D transformation is to be used to represent the 3D scene. The 3D to 2D transformation may for example by one of the 2D parametrization examples or one of the projections described before.

In an operation 113, the sound information acquired with the first video, when any sound has been acquired, is encoded into an audio track according to a determined format, for example according to AAC (Advanced Audio Coding) standard, WMA (Windows Media Audio), MPEG-1/2 Audio Layer 3.

In an operation 114, the data of the 3D scene (i.e. the attributes associated with the elements (mesh elements or points) is encoded into syntax elements or video tracks of a bitstream according to a determined format, for example according to H.264/MPEG-4 AVC: "*Advanced video coding for generic audiovisual Services*", SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265". For example, the texture information of the part of the 3D scene that is visible according to the first central point of view 30 is encoded into a first syntax element (or into a video track). The geometry information (for example depth images or depth patch atlas) of the parts of the 3D scene that are visible from the set of points of view 33 is encoded into a second syntax element (or into a further video track). The texture information of the parts of the 3D scene visible from the points of view of the set of points of view 33 excluding the first point of view 30 (i.e. the texture information that has not been encoded into the first syntax element) is encoded into a third syntax element (or into a further video track).

According to a variant, the geometry information and the texture information are encoded into a same syntax element, i.e. the second and the third syntax elements form a same syntax element of the bitstream.

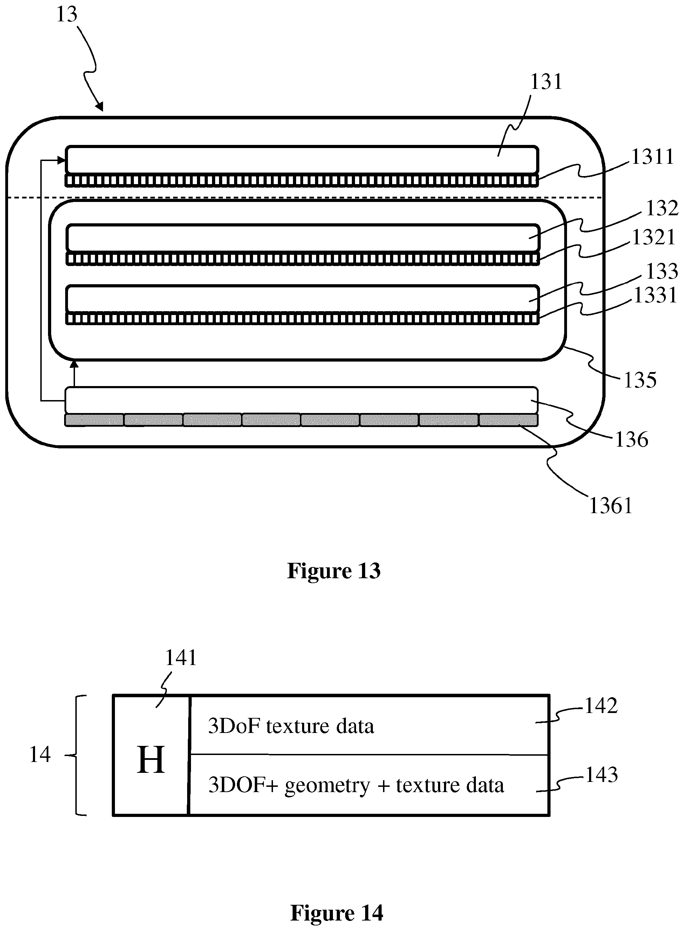

In an operation 115, the signalling information and the metadata associated with the 3D to 2D transformation(s) used to represent the 3D scene in two dimensions are encoded/formatted into a container, for example the container 13 that will be described with more details with regard to figure 13. According to a variant, the first, second and third syntax elements comprising the attributes of the 3D scene encoded during operation 114 are encapsulated with the signalling information and metadata in the container 13.

The bitstream(s) obtained at operation 114 and 115 is (are) stored in a memory device and/or transmitting to be decoded and process, e.g. to render the data representative of the 3D scene comprised in such bitstream(s), as described with more details with regard to **figure 12.** The bitstream may comprise for example the data encoded/formatted into the container and the encoded data first, second and third syntax elements generated during operation 114.

**Figure 12** shows a process of obtaining, decapsulating, decoding and/or interpreting data representative of the 3D scene 20 from the one or more bitstreams obtained from the process of figure 11, according to a particular embodiment of the present principles.

In an operation 121, the container obtained at operation 115 (an example of which being shown on figure 13) is interpreted and the data contained in this container are decapsulated and/or decoded to then decode the data encoded in the first, second and third syntax elements and/or in the audio tracks in operations 122 and 123.

In an operation 124, a 3DoF representation of the 3D scene or a 3DoF+ representation of the 3D scene is composited and optionally rendered using the decoded data of the container and the decoded data of the first syntax element (for the 3DoF representation) or the decoded data of the first, second and third syntax elements (for the 3DoF+ representation).

In an optional further operation, the rendered 3D scene may be displayed on a display device such as a HMD, or stored in a memory device.

In an optional further operation, audio information is rendered from the decoded audio tracks for storage in a memory device or rendering using loudspeaker(s).

**Figure 13** shows a non-restrictive example of the syntax of a container 13. The container 13 corresponds for example to an ISOBMFF (ISO Base Media File Format, ISO/IEC 14496-12-MPEG-4 Part 12) file comprising the following elements:

- a first video track 131 comprising signaling information with metadata for generating 3D points of the 3D scene from the texture data encoded into the first syntax element at operation 114. The first video track may for example comprise a sequence 1311 of frame samples that each comprises metadata describing parts of the texture data encoded into the first syntax element. A time stamp may be associated with each frame sample, a frame sample being for example associated with a picture of the 3D scene at a time t or with a group of pictures (GOP). The metadata and signaling information comprised in the first video track 131 enables to obtain a 3D representation of the scene in combination with the texture data encoded into the first syntax element, the 3D scene being reconstructed according to the single first point of view, for a 3DoF rendering of the scene;

- a second video track 132 comprising signaling information with metadata enabling to reconstruct the geometry of the 3D scene from the geometry data encoded into the second syntax element at operation 114. The second video track 132 may for example comprise a sequence 1321 of frame samples that each comprises metadata describing parts of the geometry data encoded into the second syntax element. A time stamp may be associated with each frame sample, a frame sample being for example associated with a picture of the 3D scene at a time t or with a group of pictures (GOP);

- a third video track 133 comprising signaling information with metadata enabling to reconstruct the texture of the 3D scene from the texture data encoded into the third syntax element at operation 114, for the points of view of the range of points of view different from the first point of view. The third video track 133 may for example comprise a sequence 1331 of frame samples that each comprises metadata describing part of the texture data encoded into the third syntax element. A time stamp may be associated with each frame sample, a frame sample being for example associated with a picture of the 3D scene at a time t or with a group of pictures (GOP); and

- a fourth track 134 comprising timed metadata (e.g. un-projection parameters) that may be used in association with the data comprised in the first video track 131, the second video track 132 and the third video track 133.

A 3DoF+ rendering of the 3D scene (i.e. with parallax) uses the four tracks 131 to 134 while a simple 3DoF rendering of the scene only uses the first track 131, enabling decoder and render that are not compliant with a 3DoF+ (or 6DoF) rendering to interpret, decode and render the data representative of the 3D scene. The formatting of the data according to the format described hereinabove enables a decoding/rendering of the 3D scene according to 3DoF or 3DoF+ from the same file/container, depending on the capabilities of the decoder/render. Such a file format/container enables backward compatibility of a 3DoF+ content with a 3DoF receiver.

The second and third video tracks 132, 133, which carry the 3D geometry and texture data required, enable the 3DoF+ presentation: the 3DoF+ geometry track carries the projected geometry maps, and the projected 3DoF+ texture track carries the projected texture maps. An un-projection mechanism is specified to map pixels of rectangular video frames onto 3D point cloud data. A specific so-called Multiple Shifted Equi-Rectangular Projection (MS-ERP) may be defined as default 3D-to-2D projection, but other alternative projection mechanisms may be implemented. The MS-ERP combines a set of equirectangular projections onto spheres shifted from central viewpoint (i.e. the first point of view 30) and with different orientations.

According to a variant, a further second video track may be used to transport the mapping information between the patches of the patch atlas (geometry and texture) and the corresponding 2D parametrization and associated 3D part of the 3D scene, especially when the geometry patches and the texture patches are arranged in a same way in respectively the geometry patch atlas and texture patch atlas.

According to a variant, the metadata comprised in the fourth track 134 are not encapsulated into the container 13. According to this variant, the metadata of the fourth track 134 are transmitted in-band, with the same structure. A transmission in-band corresponds for example to a transmission in the bitstream with the encoded data of the first, second and third syntax elements (obtained at operation 114). The metadata may for example be transmitted in SEI (Supplemental Enhancement Information) messages.

Second video track

The second video track 132 defined in the present disclosure contains the geometry information related to 3DoF+ elements. A possible embodiment of such geometry information is to use a video organized in sub regions for which each of this region contains depth map, mask and viewpoint information. For some content, parts of the geometry information (such as the viewpoint information) remains static throughout the content, the present invention allows signaling such static information in static ISOBMFF boxes but also allows sending such information in a timed metadata track should it be dynamically changed at some time in the content.

Similar to what is done for the first video track 131, a restricted video scheme is defined for the second video track 132 (for instance here, the 'p3pg' scheme type, for projected 3DoF+ geometry) that contains a single new box (for instance here, the Projected3DoFplusGeometryBox) which carries the following information:

- the projection format of the projected geometry map;
- the static un-projection parameters for the projection format;
- a flag indicating if there are other un-projection parameters which are temporally dynamic.

The use of the projected 3DoF+ geometry video scheme for the restricted visual sample entry type 'resv' indicates that the decoded pictures are projected geometry map pictures. The use of the projected 3DoF+ geometry scheme is indicated by scheme_type equal to 'p3pg' within the SchemeTypeBox. The format of the projected geometry map pictures is indicated with the Projected3DoFplusGeometryBox contained within the SchemeInformationBox.

An illustrative example ISOBMFF syntax for these elements is:

**Projected 3DoF+ geometry box**
Box Type: 'p3pg'

Container: Scheme Information box ('schi')
Mandatory: Yes, when scheme_type is equal to 'p3pd'
Quantity: Zero or one

```
aligned(8) class Projected3DoFplusGeometryBox extends Box('p3pg') {
    ProjectionFormat3DoFplusBox(); // mandatory
    Box[] other_boxes; // optional
}
aligned(8) class ProjectionFormat3DoFplusBox() extends
ProjectionFormatBox('pf3d') {
    bit(7) reserved = 0;
    unsigned int(1) static_flag;
    StaticUnprojectionParametersStruct(projection_type);
}
aligned(8) class StaticUnprojectionParametersStruct(projection_type) {
    if (projection_type == 0){
        bit(7) reserved = 0;
        unsigned int(1) static_viewpoints_geometry_flag;
        ShiftedViewpointsGeometry();
    }
}
aligned(8) class ShiftedViewpointsGeometry() {
    bit(5) reserved = 0;
    unsigned int(3) num_viewpoints;
    for (i = 0; i < num_viewpoints; i++)
        SphereRegionStruct();// constraint: hor_range = ver_range = 0;
        unsigned int(32) radius;
}
```

With the following semantics:

**projection_type** (defined in OMAF ProjectionFormatBox (Study of ISO/IEC DIS 23000-20 Omnidirectional Media Format, ISO/IEC JTC1/SC29/WG11 N16950, July 2017, Torino, Italia), the syntax of which is re-used through the box extension mechanism) indicates the particular mapping of the rectangular decoder picture output samples onto the 3D coordinate system; projection_type equal to 0 indicates the multiple shifted equirectangular projection (MS-ERP).

**static_flag** equal to 0 indicates that projection parameters are dynamically updated along time. In that case, a timed metadata track referencing the current video track is mandatory to describe the dynamic parameters of the un-projection. When projection_type is equal to 0, static_flag shall be equal to 0.

**ShiftedViewpointsGeometry** specifies all the viewpoints used by the MS-ERP projection and their relative positions with respect to the central viewing point (i.e. the origin of the global coordinate system).

**num_viewpoints** indicates the number of viewpoints, distinct from central viewing point, which are used by the MS-ERP projection; num_viewpoints values range from 0 to 7.

**radius** is a fixed point 16.16 value specifying the distance from the origin of the global coordinate system.

**static_viewpoints_geometry_flag** equal to 0 indicates that the number and geometry of additional viewpoints used by the MS-ERP projection are dynamically updated along time. In that case, the ShiftedViewpointsGeometry instances in the timed metadata track referencing the current video track prevail over the static instances defined in the scheme information box.

Third video track

The third video track 133 defined in the present disclosure contains the texture information related to 3DoF+ elements.

Similar to what is done for the first video track 131, we define here a restricted video scheme for the projected 3DoF+ texture video (for instance here, the 'p3pt' scheme type) that contains a single new box (for instance here, the Projected3DoFplusTextureBox) which carries the following information:

- the projection format of the projected texture map;
- the static un-projection parameters for the projection format;
- a flag indicating if there are other un-projection parameters which are temporally dynamic.

The use of the projected 3DoF+ texture video scheme for the restricted visual sample entry type 'resv' indicates that the decoded pictures are projected pictures containing texture content of scene parts unseen from central viewpoint but uncovered in a 3DoF+ experience. The use of the projected 3DoF+ texture scheme is indicated by scheme_type equal to 'p3pt' within the SchemeTypeBox. The format of the projected texture pictures is indicated with the Projected3DoFplusTextureBox contained within the SchemeInformationBox.

A proposed ISOBMFF syntax for these elements is:

**Projected 3DoF+ texture box**
Box Type: 'p3pt'
Container: Scheme Information box ('schi')
Mandatory: Yes, when scheme_type is equal to 'p3pt'
Quantity: Zero or one

```
aligned(8) class Projected3DoFplusTextureBox extends Box('p3pt') {
    ProjectionFormat3DoFplusBox(); // mandatory
    Box[] other_boxes; // optional
}
```

where Projected3DoFplusTextureBox is the same box as in the 3DoF+ geometry video track.

Grouping 135 of the second and third video tracks

The first video track 131 (3DoF), the 3DoF+ geometry video track, and the 3DoF+ texture video track, shall be associated together as, save for the first video track 131, they are not standalone tracks. The second and third video tracks may be contained in the same ISOBMFF track group. For instance, TrackGroupTypeBox with track_group_type equal to '3dfp' indicates that this is a group of tracks that can be processed to obtain pictures suitable for a 3DoF+ visual experience. The tracks mapped to this grouping (i.e. the tracks that have the same value of track_group_id within TrackGroupTypeBox with track_group_type equal to '3dfp') collectively represent, when combined with a projected omnidirectional video (3DoF) track, a 3DoF+ visual content that can be presented.

One or more of the following constraints may apply for the tracks mapped to this grouping:

- This grouping shall be composed of at least two video tracks with sample entry type equal to 'resv': at least one with a scheme_type identifying a 3DoF+ geometry video track (for instance 'p3pd' here) and one with a scheme_type identifying a 3DoF+ texture video track (for instance 'p3pt' here);
- The content of the instances of ProjectionFormat3DoFplusBox included in the sample entries of the 3DoF+ geometry map ('p3pg') and texture map ('p3pt') video tracks shall be identical;
- When static_flag within the ProjectionFormat3DoFplusBox is equal to 0, a timed metadata track ('dupp') describing the dynamic un-projection parameters shall be present in the 'moov' container box 13 and linked to the 3DoF+ track group 135 (with a 'cdtg' track reference).

Fourth track

While some of the un-projection parameters are static and may be described in the 3DoF+ geometry and texture tracks (i.e. the second and third video tracks 132, 133), part of the un-projection parameters for the 3DoF+ content is dynamic. Such dynamic un-projection parameters may be transmitted in a timed metadata track, i.e. the fourth track 134, associated with the first, second and third video tracks 131, 132, 133.

According to a non-restrictive embodiment, a metadata sample entry of type 'dupp' (for dynamic un-projection parameters) for un-projection parameters may be defined as described below:

Sample Entry Type: 'dupp'
Container: Sample Description Box ('stsd')
Mandatory: No
Quantity: Zero or one

```
class UnprojectionParametersSampleEntry()
    extends MetadataSampleEntry('dupp') {
}
```

Each metadata sample contains all the required information needed to perform the un-projection of all parts (3D patches) of the volumetric video from the omnidirectional (3DoF) video, projected 3DoF+ geometry video and projected 3DoF+ texture video, i.e. the first, second and third video tracks 131, 132 and 133.

The projections of 3D patches data onto their associated projection surface yield a collection of irregularly-shaped 2D regions the rectangular bounding boxes of which are further mapped onto a packed picture by indicating their locations, orientations and sizes. Texture and geometry data are packed in separate pictures. The sequence of texture packed pictures and geometry packed pictures make up respectively the projected 3DoF+ texture atlas map and projected 3DoF+ geometry atlas map.

A packing structure inspired from the region-wise packing structure defined in OMAF (Study of ISO/IEC DIS 23000-20 Omnidirectional Media Format, ISO/IEC JTC1/SC29/WG11 N16950, July 2017, Torino, Italia) but keeping only useful parameters (number of regions and for all regions: guard-band information, optional transformation, position and size) may be generated. Compared to OMAF region-wise packing structure, the number of regions also needs to be extended as atlases are expected to use more than 256 regions.

Each sample specifies a list of 3D patches. Each 3D patch describes a portion of the 3D scene volume (spherical range) and links to the storage structure of projected texture and geometry data for this patch. This includes:

- Information about all the viewpoints from which 3D patches are viewed. If this information is static (and therefore signaled in the 3DoF+ geometry and texture track) then a flag must also be present in the timed metadata to indicate this.

- Information about the organization/packing of all 2D rectangular patches in the geometry video. This is referred in this invention as the 3DoF+ geometry atlas map.
- Information about the organization/packing of all 2D rectangular patches in the texture video. This is referred in this invention as the 3DoF+ texture atlas map.
- Information about the number of 3D patches and for each 3D patch information about:

    o the 3D volume described by the 3D patch identified by min and max values for yaw, pitch and roll angles,
    o which viewpoint (and possibly with a different orientation) is used for it,
    o the identification of the patch in the 3DoF+ geometry map,
    o the identification of the patch in 3DoF+ texture map (i.e. the third video track 133) or in the first video track 131.

A possible embodiment in ISOBMFF for the metadata sample format is the following:

```
aligned(8) UnprojectionParametersSample(){
      bit(7) reserved = 0;
      unsigned int(1) static_viewpoints_geometry_flag;
      if (static_viewpoints_geometry_flag == 0)
           ShiftedViewpointsGeometry(); // number and locations of
                                        // shifted viewpoints
      unsigned int(16) num_3Dpatches;
      for (i = 0; i < num_3Dpatches; i++)
           PatchStruct();
      PatchAtlasPackingStruct(); // texture atlas map
      PatchAtlasPackingStruct(); // geometry atlas map
  }
aligned(8) class PatchStruct() extends SphericalRange() {
      bit(3) reserved = 0;
      unsigned int(3) sphere_id;
      unsigned int(2) orientation_id;
      bit(7) reserved = 0;
      unsigned int(1) omnidirectional_compatible_flag;
      if (omnidirectional_compatible_flag == 0)
           unsigned int(16) texture_atlas_region_id;
      bit(6)reserved = 0;
      unsigned int(16) geometry_atlas_region_id;
  }
aligned(8) class SphericalRange() {
      signed int(32) yaw_min;
      signed int(32) yaw_max;
      signed int(32) pitch_min;
```

```
            signed int(32) pitch_max;
            unsigned int(32) rho_min;
            unsigned int(32) rho_max;
    }
  aligned(8) class PatchAtlasPackingStruct {
            unsigned int(16) num_regions;
            for (i = 0; i < num_regions; i++) {
                  bit(7) reserved = 0;
                  unsigned int(1) guard_band_flag[i];
                  if (guard_band_flag[i]) {
                        unsigned int(8) left_gb_width[i];
                        unsigned int(8) right_gb_width[i];
                        unsigned int(8) top_gb_height[i];
                        unsigned int(8) bottom_gb_height[i];
                        unsigned int(1) gb_not_used_for_pred_flag[i];
                        unsigned int(3) gb_type[i];
                        bit(4) reserved = 0;
                   }
                  RectRegionPacking(i);
            }
    }
  aligned(8) class RectRegionPacking(i){
            unsigned int(3) transform_type[i];
            bit(5) reserved = 0;
            unsigned int(16) packed_reg_width[i];
            unsigned int(16) packed_reg_height[i];
            unsigned int(16) packed_reg_top[i];
            unsigned int(16) packed_reg_left[i];
    }
```

where:

**static_viewpoints_geometry_flag** indicates that the number and locations of shifted viewpoints used by MS-ERP projection are static and to be found in ProjectionFormat3DoFplusBox.

**num_3Dpatches** specify the number of 3D patches.

**sphericalRange** specifies (in spherical coordinates) the 3D volume described by the patch:

- yaw_min and yaw_max specifiy the minimum and maximum yaw angles, in units of $180*2^{-16}$ degrees relative to the projection sphere coordinate axes; they shall be in the range $-2^{16}$ to $2^{16}$-1, inclusive (that is $\pm 180°$);
- pitch_min and pitch_max specifiy the minimum and maximum pitch angles, in units of $180*2^{-16}$ degrees relative to the projection sphere coordinate axes; they shall be in the range $-2^{15}$ to $2^{15}$, inclusive (that is $\pm 90°$);
- rho_min and rho_max are fixed point 16.16 values specifiying the minimum and maximum radii relative to the projection sphere coordinate axes (in meters).

**omnidirectional_compatible_flag** indicates that the patch texture content is found in the first video track; sphere_id values range from 0 to 7:

- sphere_id equal to 0 indicates that the projection sphere used for the first video track (centered at the origin of the scene coordinate system) is used; if omnidirectional_compatible_flag is equal to 1 sphere_id shall be equal to 0; if omnidirectional_compatible_flag is equal to 0 then sphere_id shall not be equal to 0;
- sphere_id values ranging from 1 to num_viewpoints indicates which one of the num_viewpoints additional MS-ERP projection spheres is used; the patch texture content is found in the projected 3DoF+ texture video track;

**orientation_id** specifies the orientation of the coordinate axes of the current MS-ERP projection sphere:

- orientation_id values ranging from 1 to 3 correspond to 3 different orientations;
- orientation_id shall be equal to 0 when sphere_id equal to 0.

The PatchAtlasPackingStruct specifies such rectangular regions layout. The first instance of PatchAtlasPacking-Struct in UnprojectionParametersSample specifies the packing arrangement of texture patches, the second instance described the packing arrangement of geometry patches.

**texture_atlas_region_id** specifies the index of the rectangular region in the packed texture picture (texture patch atlas).

**geometry_atlas_region_id** specifies the index of the rectangular region in the packed geometry picture (geometry patch atlas).

**Figure 14** shows an example of an embodiment of the syntax of a stream when the data are transmitted over a packet-based transmission protocol. Figure 14 shows an example structure 14 of a volumetric video stream. The structure consists in a container which organizes the stream in independent elements of syntax. The structure may comprise a header part 141 which is a set of data common to every syntax elements of the stream. For example, the header part comprises metadata about syntax elements, describing the nature and the role of each of them. The header part may also comprise the coordinates of the point of view used for the encoding the first color image for 3DoF rendering and information about the size and the resolution of pictures. The structure comprises a payload comprising a first element of syntax 142 and at least one second element of syntax 143. The first syntax element 142 comprises data representative of the first color image prepared for a 3DoF rendering, corresponding to the first video track associated with the texture data encoded in the first syntax element obtained at operation 114.

The one or more second syntax elements 143 comprises geometry information and texture information associated with the second and third video tracks and the respective second and third syntax elements of encoded data obtained at operation 114.

For illustration purpose, in the context of ISOBMFF file format standard, texture map, geometry map and the metadata would typically be referenced in ISOBMFF tracks in a box of type moov, with the texture data and geometry data themselves embedded in media-data box of type mdat.

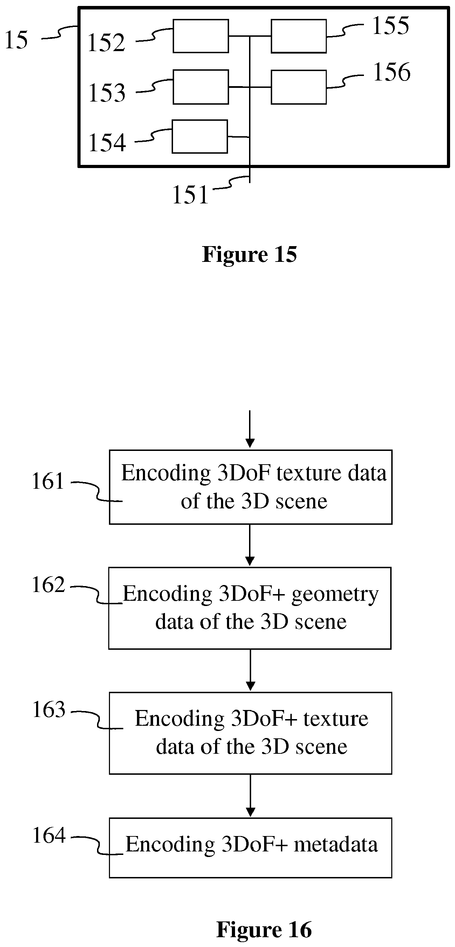

**Figure 15** shows an example architecture of a device 15 which may be configured to implement a method described in relation with figures 11, 12, 16 and/or 17. The device 15 may be configured to be an encoder 101 or a decoder 103 of figure 10.

The device 15 comprises following elements that are linked together by a data and address bus 151:

- a microprocessor 152 (or CPU), which is, for example, a DSP (or Digital Signal Processor);
- a ROM (or Read Only Memory) 153;
- a RAM (or Random-Access Memory) 154;
- a storage interface 155;
- an I/O interface 156 for reception of data to transmit, from an application; and
- a power supply, e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 153 comprises at least a program and parameters. The ROM 153 may store algorithms and instructions to perform techniques in accordance with present principles. When switched on, the CPU 152 uploads the program in the RAM and executes the corresponding instructions.

The RAM 154 comprises, in a register, the program executed by the CPU 152 and uploaded after switch-on of the device 150, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder 101 of figure 10, the three-dimension scene 20 is obtained from a source. For example, the source belongs to a set comprising:

- a local memory (153 or 154), e.g. a video memory or a RAM (or Random-Access Memory), a flash memory, a ROM (or Read Only Memory), a hard disk;
- a storage interface (155), e.g. an interface with a mass storage, a RAM, a flash memory, a ROM, an optical disc or a magnetic support;

- a communication interface (156), e.g. a wireline interface (for example a bus interface, a wide area network interface, a local area network interface) or a wireless interface (such as a IEEE 802.11 interface or a Bluetooth® interface); and
- a user interface such as a Graphical User Interface enabling a user to input data.

In accordance with examples of the decoding or decoder(s) 103 of figure 10, the stream is sent to a destination; specifically, the destination belongs to a set comprising:

- a local memory (153 or 154), e.g. a video memory or a RAM, a flash memory, a hard disk;
- a storage interface (155), e.g. an interface with a mass storage, a RAM, a flash memory, a ROM, an optical disc or a magnetic support; and
- a communication interface (156), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface).

In accordance with examples of encoding or encoder, a bitstream comprising data representative of the volumetric scene is sent to a destination. As an example, the bitstream is stored in a local or remote memory, e.g. a video memory or a RAM, a hard disk. In a variant, the bitstream is sent to a storage interface, e.g. an interface with a mass storage, a flash memory, ROM, an optical disc or a magnetic support and/or transmitted over a communication interface, e.g. an interface to a point to point link, a communication bus, a point to multipoint link or a broadcast network.

In accordance with examples of decoding or decoder or renderer 103 of figure 10, the bitstream is obtained from a source. Exemplarily, the bitstream is read from a local memory, e.g. a video memory, a RAM, a ROM, a flash memory or a hard disk. In a variant, the bitstream is received from a storage interface, e.g. an interface with a mass storage, a RAM, a ROM, a flash memory, an optical disc or a magnetic support and/or received from a communication interface, e.g. an interface to a point to point link, a bus, a point to multipoint link or a broadcast network.

In accordance with examples, the device 15 is configured to implement a method described in relation with figures 11, 12, 16 and/or 17, and belongs to a set comprising:

- a mobile device;
- a communication device;
- a game device;
- a tablet (or tablet computer);
- a laptop;
- a still picture camera;
- a video camera;
- an encoding chip;
- a server (e.g. a broadcast server, a video-on-demand server or a web server).

**Figure 16** illustrates a method for encoding data representative of a 3D scene, for example the 3D scene 20, according to a non-restrictive embodiment of the present principles. The method may for example be implemented in the encoder 101 and/or in the device 15. The different parameters of the device 15 may be updated. The 3D scene may for example be obtained from a source, one or more points of view may be determined in the space of the 3D scene, parameters associated with projection mapping(s) may be initialized.

In a first operation 161, first data representative of the texture of the 3D scene is encoded or formatted into a first video track of a container or of a file. The first data refers to the parts (e.g. points or mesh elements) of the 3D scene that are visible according to a single first point of view. The first data comprises for example metadata and signalling information pointing to a first syntax element of a bitstream that comprises the texture information encoded into pixels of patches or images of the 3D scene, obtained for example by 3D to 2D transformation (for example an equirectangular projection of the 3D scene onto patches or images, each patch or image being associated with a part of the 3D scene). The metadata encoded into the first video track comprises for example the parameters of the 3D to 2D transformation or the parameters of the inverse transformation (2D to 3D). The first data, once decoded or interpreted, enables to obtain a 3DoF representation of the 3D scene according to the first point of view, i.e. a representation without parallax.

In a second operation 162, second data representative of the geometry of the 3D scene is encoded or formatted into a second video track of the container or of the file. The second data refers to the parts (e.g. points or mesh elements) of the 3D scene that are visible according to a set (or range) of points of view that includes the first point of view. The second data comprises for example metadata and signalling information pointing to a second syntax element of the bitstream that comprises the geometry information encoded into pixels of patches or images of the 3D scene, obtained for example by 3D to 2D transformation (for example an equirectangular projection of the 3D scene onto patches or images, each patch or image being associated with a part of the 3D scene). The metadata encoded into the second video track comprises for example the parameters of the 3D to 2D transformation or the parameters of the inverse transformation (2D to 3D).

In a third operation 163, third data representative of the texture of at least a part of the 3D scene is encoded or formatted into a third video track of the container or of the file. The third data refers to the parts (e.g. points or mesh elements) of the 3D scene that are visible according to the points of view of the set without the part of the scene visible according to the first point of view. The third data comprises for example metadata and signalling information pointing to a third syntax element of the bitstream that comprises the texture information encoded into pixels of patches or images of said parts of the 3D scene visible from the points of view of the set excluding the first point of view, the patches (or images) being for example obtained by 3D to 2D transformation (for example an equirectangular projection of the 3D scene onto patches or images, each patch or image being associated with a part of the 3D scene). The metadata encoded into the third video track comprises for example the parameters of the 3D to 2D transformation or the parameters of the inverse transformation (2D to 3D).

In a fourth operation 164, metadata is encoded in a fourth track. The metadata is associated with the second data and with the third data and enable a 3DoF+ representation of the 3D scene together with the first, second and third video tracks (and associated data encoded into the first, second and third syntax elements of the bitstream). The metadata comprises the information representative of the one or more projections used to obtain the second and third data, for example from a point of view to another one.

The metadata comprises at least one (or any combination of) the following information:

- information representative of at least one point of view associated with at least one projection used to obtain the geometry and texture;
- information representative of a packing of patches of geometry, each patch of geometry being associated with the projection of a part of the 3D scene;
- information representative of a packing of patches of texture, each patch of texture being associated with the projection of a part of the 3D scene;
- information representative of a number of patches, each patch being associated with a part of the 3D scene and associated with an identifier in the second track and in the first video track or in the third video track.

According to a variant, the first, second and third syntax elements the first, second and third video tracks respectively refer to are encapsulated in the same container as the first, second and third video tracks. According to a variant, the data of the first, second and third syntax elements is encapsulated in a file different from the file (or container) comprising the data or metadata of the first, second, third and fours tracks, all data being transmitted in a single bitstream.

The second data comprises for example a first information representative of a format of a projection used to obtain the geometry, the parameters of the projection and a flag indicating whether at least some of the projection parameters are dynamically updated. When the flag indicates that the parameters are dynamically updated, a parser may retrieve the updated parameters from the fourth track.

The third data comprises for example a second information representative of a format of a projection used to obtain the geometry, the parameters of the projection and a flag indicating whether at least some of the projection parameters are dynamically updated. When the flag indicates that the parameters are dynamically updated, a parser may retrieve the updated parameters from the fourth track.

According to another variant, the first video track and the at least a second video track are grouped in a same track group when the first information and the second information are identical.

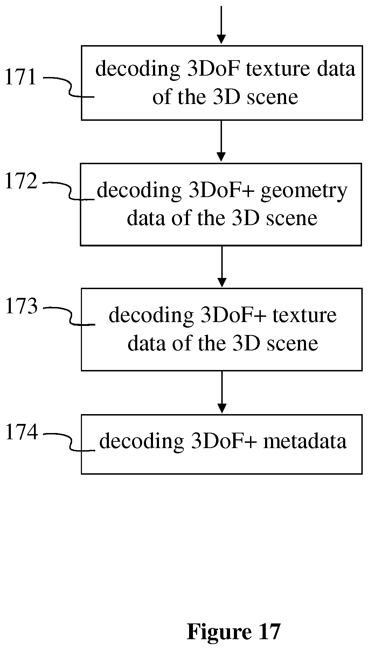

**Figure 17** illustrates a method for decoding data representative of a 3D scene, for example the 3D scene 20, according to a non-restrictive embodiment of the present principles. The method may for example be implemented in the encoder 101 and/or in the device 15.

In a first operation 171, the first data representative of the texture of the part of the 3D scene that is visible according to a first point of view is decoded or interpreted from a first video track of a received container, the container being for example included in a bitstream.

In a second operation 172, the second data representative of the geometry of the 3D scene that is visible according to a set of points of view comprising the first point of view is decoded or interpreted from a second video track of the received container.

In a third operation 173, the third data representative of the texture of the part(s) of the 3D scene that is (are) visible from the points of view of set excluding the first point of view is decoded or interpreted from a third video track of the container.

In a fourth operation 174, metadata is decoded or interpreted from a fourth track of the container. The metadata is associated with the second data and with the third data and enable a 3DoF+ representation of the 3D scene together with the first, second and third video tracks (and associated data encoded into the first, second and third syntax elements of the bitstream). The metadata comprises the information representative of the one or more projections used to obtain the second and third data

Naturally, the present disclosure is not limited to the embodiments previously described.

In particular, the present disclosure is not limited to a method and device for encoding/decoding data representative of a 3D scene but also extends to a method for generating a bitstream comprising the encoded data and to any device implementing this method and notably any devices comprising at least one CPU and/or at least one GPU.

The present disclosure also relates to a method (and a device configured) for displaying images rendered from the decoded data of the bitstream.

The present disclosure also relates to a method (and a device configured) for transmitting and/or receiving the bitstream.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of encoding data representative of a 3D scene into a container, the method comprising:

   - encoding, into a first video track of said container, first data representative of texture of said 3D scene visible according to a first point of view;

- encoding, into at least a second video track of said container, second data representative of geometry of said 3D scene visible according to a set of points of view comprising said first point of view;

- encoding, into a third video track of said container, third data representative of texture of said 3D scene visible only from the points of view of said set excluding said first point of view; and

- encoding metadata into a fourth track of said container, said metadata being associated with the first data of the first video track, the second data of the at least a second video track and the third data of the third video track, said metadata comprising information representative of at least a projection used to obtain said second and third data.

2. A device configured to encode data representative of a 3D scene into a container, the device comprising a memory associated with at least one processor configured to:

- encode, into a first video track of said container, first data representative of texture of said 3D scene visible according to a first point of view;

- encode, into at least a second video track of said container, second data representative of geometry of said 3D scene visible according to a set of points of view comprising said first point of view;

- encode, into a third video track of said container, third data representative of texture of said 3D scene visible only from the points of view of said set excluding said first point of view; and

- encode metadata into a fourth track of said container, said metadata being associated with the first data of the first video track, the second data of the at least a second video track and the third data of the third video track, said metadata comprising information representative of at least a projection used to obtain said second and third data.

3. The method according to claim 1 or the device according to claim 2, wherein said first video track refers to a first syntax element of a bitstream, said at least a second video track refers to at least a second syntax element of said bitstream and said third video track refers to a third syntax element of said bitstream.

4. The method according to one of claims 1 and 3 or the device according to one of claims 2 and 3, wherein said second data comprises a first information representative of a format of a projection used to obtain the geometry, parameters of said projection and a flag indicating whether at least some of the projection parameters are dynamically updated.

5. The method according to one of claims 1, 3 and 4 or the device according to one of claims 2 to 4, wherein said third data comprises a second information representative of a format of a projection used to obtain the texture, parameters of said projection and a flag indicating whether at least some of the projection parameters are dynamically updated.

6. The method according to claims 4 and 5 or the device according to claims 4 and 5, wherein the first video track and the at least a second video track are grouped in a same track group when said first information and second information are identical.

7. The method according to one of claims 1 and 3 to 6 or the device according to one of claims 2 to 6, wherein said metadata comprises at least one of the following information:

- information representative of at least one point of view associated with at least one projection used to obtain said geometry and texture;

- information representative of a packing of rectangular 2D patches of geometry, each patch of geometry being associated with the projection of a part of said 3D scene;

- information representative of a packing of rectangular 2D patches of texture, each patch of texture being associated with the projection of a part of said 3D scene;

- information representative of a number of 3D patches, each 3D patch being associated with a part of the 3D scene and associated with an identifier in said second track and in said first video track or in said third video track.

8. A method of decoding data representative of a 3D scene from a container, the method comprising:

- decoding, from a first video track of said container, first data representative of texture of said 3D scene visible according to a first point of view;

- decoding, from at least a second video track of said container, second data representative of geometry of said 3D scene visible according to a set of points of view comprising said first point of view;

- decoding, from a third video track of said container, third data representative of texture of said 3D scene visible only from the points of view of said set excluding said first point of view; and

- decoding metadata from a fourth track of said container, said metadata being associated with the first data of the first video track, the second data of the at least a second video track and the third data of the third video track, said metadata comprising information representative of at least a projection used to obtain said second and third data.

9. A device configured for decoding data representative of a 3D scene from a container, the device comprising a memory associated with at least one processor configured to:

- decode, from a first video track of said container, first data representative of texture of said 3D scene visible according to a first point of view;

- decode, from at least a second video track of said container, second data representative of geometry of said 3D scene visible according to a set of points of view comprising said first point of view;

- decode, from a third video track of said container, third data representative of texture of said 3D scene visible only from the points of view of said set excluding said first point of view; and

- decode metadata from a fourth track of said container, said metadata being associated with the first data of the first video track, the second data of the at least a second video track and the third data of the third video track, said metadata comprising information representative of at least a projection used to obtain said second and third data.

10. The method according to claim 8 or the device according to claim 9, wherein said first video track refers to a first syntax element of a bitstream, said at least a second video track refers to at least a second syntax element of said bitstream and said third video track refers to a third syntax element of said bitstream.

11. The method according to one of claims 8 and 10 or the device according to one of claims 9 and 10, wherein said second data comprises a first information representative of a format of a projection used to obtain the geometry, parameters of said projection and a flag indicating whether at least some of the projection parameters are dynamically updated.

12. The method according to one of claims 8, 10 and 11 or the device according to one of claims 9 to 11, wherein said third data comprises a second information representative of a format of a projection used to obtain the geometry, parameters of said projection and a flag indicating whether at least some of the projection parameters are dynamically updated.

13. The method according to claims 11 and 12 or the device according to claims 11 and 12, wherein the first video track and the at least a second video track are grouped in a same track group when said first information and second information are identical.

14. The method according to one of claims 8 and 10 to 13 or the device according to one of claims 9 to 13, wherein said metadata comprises at least one of the following information:

- information representative of at least one point of view associated with at least one projection used to obtain said geometry and texture;

- information representative of a packing of patches of geometry, each patch of geometry being associated with the projection of a part of said 3D scene;

- information representative of a packing of patches of texture, each patch of texture being associated with the projection of a part of said 3D scene;

- information representative of a number of 3D patches, each patch being associated with a part of the 3D scene and associated with an identifier in said second track and in said first video track or in said third video track.

15. A bitstream carrying data representative of a 3D scene, said data comprising, in a first video track of a container, first data representative of texture of said 3D scene visible according to a first point of view; in at least a second video track of said container, second data representative of geometry of said 3D scene visible according to a set of points of view comprising said first point of view; in a third video track of said container, third data representative of texture of said 3D scene visible only from the points of view of said set excluding said first point of view; and metadata in a fourth track of said container, said metadata being associated with the first data of the first video track, the second data of the at least a second video track and the third data of the third video track, said metadata comprising information representative of at least a projection used to obtain said second and third data.

**Figure 1**

**Figure 2**

**Figure 3**

4A 4B 4C

**Figure 4**

**Figure 5**

**Figure 6**

Figure 7

82

81

80

83

Figure 8A

**Fig 8B**

**Figure 9**

**Figure 10**

113                    115

Audio
encoding

File/segment
encapsulation

Acquisition    Processing/
signalling

Video
encoding

111            112          114

Metadata

transmitting

**Figure 11**

receiving

123

Audio
decoding

File/segment
decapsulation

Display    Image
compositing
and rendering

Video
decoding

124        122                    121

Metadata

**Figure 12**

**Figure 13**

**14** {
H | 141
3DoF texture data — 142
3DOF+ geometry + texture data — 143

**Figure 14**

15

152

153

154

155

156

151

**Figure 15**

161 — Encoding 3DoF texture data of the 3D scene

162 — Encoding 3DoF+ geometry data of the 3D scene

163 — Encoding 3DoF+ texture data of the 3D scene

164 — Encoding 3DoF+ metadata

**Figure 16**

171 ⟶ | decoding 3DoF texture data of the 3D scene |

172 ⟶ | decoding 3DoF+ geometry data of the 3D scene |

173 ⟶ | decoding 3DoF+ texture data of the 3D scene |

174 ⟶ | decoding 3DoF+ metadata |

**Figure 17**

Europäisches
Patentamt

European
Patent Office

Office européen
des brevets

# EUROPEAN SEARCH REPORT

Application Number

EP 17 30 6443

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/235152 A1 (HANNUKSELA MISKA MATIAS [FI] ET AL) 12 September 2013 (2013-09-12) <br> * figures 15-18 * <br> * paragraph [0088] * <br> * paragraph [0189] - paragraph [0197] * <br> * paragraphs [0313], [0333], [0334] * <br> ----- | 1-15 | INV. <br> H04N21/854 <br> H04N21/81 <br> H04N21/218 |
| Y | WO 2017/142353 A1 (LG ELECTRONICS INC [KR]) 24 August 2017 (2017-08-24) <br> * figures 1, 2, 4, 6, 8, 18-20 * <br> * paragraph [0087] - paragraph [0092] * <br> * paragraphs [0107], [0108] * <br> * paragraph [0139] - paragraph [0145] * <br> * paragraph [0160] - paragraph [0209] * <br> * paragraph [0241] - paragraph [0256] * <br> * paragraph [0360] - paragraph [0446] * <br> ----- | 1-15 | |
| Y | WO 2017/145757 A1 (SONY CORP [JP]) 31 August 2017 (2017-08-31) <br><br> * figures 1, 2, 5, 16, 17, 21-27, 33 * <br> * paragraph [0003] - paragraph [0008] * <br> * paragraph [0028] - paragraph [0069] * <br> * paragraph [0205] - paragraph [0210] * <br> ----- | 1-5, 7-12,14, 15 | |
| Y | XIN WANG ET AL: "From OMAF for 3DoF VR to MPEG-I Media Format for 3DoF+, Windowed 6DoF and 6DoF VR", <br> 119. MPEG MEETING; 17-7-2017 - 21-7-2017; TORINO; (MOTION PICTURE EXPERT GROUP OR ISO/IEC JTC1/SC29/WG11),, <br> no. m41197, 10 July 2017 (2017-07-10), XP030069540, <br> * the whole document * <br> ----- | 6,13 | |

TECHNICAL FIELDS SEARCHED (IPC)

H04N

The present search report has been drawn up for all claims

| Place of search | Date of completion of the search | Examiner |
|---|---|---|
| Munich | 17 January 2018 | Döttling, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6443

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2018

| Patent document cited in search report | | Publication date | Patent family member(s) | | Publication date |
|---|---|---|---|---|---|
| US 2013235152 | A1 | 12-09-2013 | CN 103907347 A | | 02-07-2014 |
| | | | EP 2752011 A1 | | 09-07-2014 |
| | | | KR 20140064926 A | | 28-05-2014 |
| | | | US 2013235152 A1 | | 12-09-2013 |
| | | | WO 2013030458 A1 | | 07-03-2013 |
| WO 2017142353 | A1 | 24-08-2017 | NONE | | |
| WO 2017145757 | A1 | 31-08-2017 | NONE | | |

EPO FORM P0459

For more details about this annex : see Official Journal of the European Patent Office, No. 12/82